(19) Europäisches Patentamt / European Patent Office / Office européen des brevets

(11) **EP 2 758 553 B1**

(12) **FASCICULE DE BREVET EUROPEEN**

(45) Date de publication et mention de la délivrance du brevet:
**16.09.2015 Bulletin 2015/38**

(21) Numéro de dépôt: **12759750.8**

(22) Date de dépôt: **20.09.2012**

(51) Int Cl.:
*C21D 1/04* *(2006.01)*   *C21D 1/09* *(2006.01)*
*C21D 1/34* *(2006.01)*   *H05B 6/00* *(2006.01)*

(86) Numéro de dépôt international:
**PCT/EP2012/068498**

(87) Numéro de publication internationale:
**WO 2013/041601 (28.03.2013 Gazette 2013/13)**

(54) **DISPOSITIF ET PROCEDE DE CHAUFFAGE D'UN OBJET SOUS UN CHAMP MAGNETIQUE INTENSE**

VORRICHTUNG UND VERFAHREN ZUM ERHITZEN EINES OBJEKTS IN EINEM STARKEM MAGNETISCHEN FELD

DEVICE AND METHOD FOR HEATING AN OBJECT IN AN INTENSE MAGNETIC FIELD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.09.2011 FR 1158340**

(43) Date de publication de la demande:
**30.07.2014 Bulletin 2014/31**

(73) Titulaires:
• **Centre National de la Recherche Scientifique (CNRS)**
**75016 Paris (FR)**
• **Université Joseph Fourier - Grenoble 1**
**38400 Saint-Martin-d'Hères (FR)**

(72) Inventeurs:
• **SIBEUD, Pierre-Frédéric**
**F-38430 Moirans (FR)**
• **BEAUGNON, Eric**
**F-38610 Gières (FR)**
• **PONT, Gilles**
**F-38320 Tullins (FR)**

(74) Mandataire: **Regimbeau**
**139, rue Vendôme**
**69477 Lyon Cedex 06 (FR)**

(56) Documents cités:
**EP-A1- 0 382 125    EP-A1- 0 630 720
EP-A2- 0 151 759    RU-C1- 2 275 432**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE DE L'INVENTION**

La présente invention concerne un dispositif et un procédé de chauffage d'un objet comprenant un matériau magnétique sous un champ magnétique intense.

**ARRIERE PLAN DE L'INVENTION**

L'élaboration de matériau sous champ magnétique - notamment un champ magnétique dit « intense », c'est-à-dire dont l'intensité est de l'ordre de plusieurs Tesla voire dizaines de Tesla - fait l'objet de nombreuses investigations scientifiques.

On a ainsi vu apparaître une branche d'activités dites de « magnéto-science », qui visent à associer à un procédé d'élaboration de matériau l'application d'un champ magnétique.

Le champ magnétique est alors considéré comme un paramètre supplémentaire pouvant influer, soit sur la morphologie du matériau au cours de sa fabrication, soit sur la cinétique des procédés d'élaboration mis en oeuvre, au même titre que des paramètres tels que la température, la pression ou la composition chimique.

En ce sens, le champ magnétique peut être utilisé pour modifier les propriétés d'usage d'un matériau.

Si de nombreux effets du champ magnétique font encore l'objet d'études fondamentales, d'autres sont aujourd'hui déjà impliqués dans des procédés industriels de synthèse des matériaux.

En effet, les aimants supraconducteurs bénéficient régulièrement d'avancées importantes aussi bien en termes de performances qu'en termes de coûts, qui rendent leur utilisation envisageable dans des procédés industriels, notamment dans le domaine de l'élaboration et du traitement des métaux.

Les traitements effectués sous champ magnétique intense impliquent presque toujours un traitement thermique pour chauffer l'objet à traiter à une température déterminée.

A l'heure actuelle, les dispositifs de chauffage comprennent des éléments chauffants résistifs ou inductifs.

Le document WO 2011/012673 décrit ainsi un dispositif de traitement d'un objet sous un champ magnétique intense comprenant par exemple un chauffage de l'objet suivi d'une trempe.

Cependant, les éléments chauffants étant parcourus par un courant électrique, il se produit un couplage entre l'aimant supraconducteur qui génère le champ magnétique et les éléments chauffants en raison des forces de Laplace et de Lorentz.

Ce couplage conduit à une détérioration rapide des éléments chauffants, ce qui nécessite un remplacement fréquent desdits éléments.

A cet effet, l'article de K. Takahashi et al., « Magnetic orientation of paraffin in a magnetic levitation furnace », Physica B 346-347 (2004), pp 277-281, propose de réfléchir un faisceau émis par un laser YAG sur deux miroirs coniques, de sorte à former un faisceau annulaire perpendiculaire au faisceau émis par le laser autour d'un échantillon à chauffer.

Cependant, ce dispositif présente un encombrement très important qui n'est pas compatible avec le volume très restreint imposé par les dispositifs de génération de champ magnétique intense.

Enfin, en raison de ses deux miroirs, ce dispositif est relativement onéreux.

Par ailleurs, il existe également un besoin de réaliser des recuits dit « flash », c'est-à-dire avec une montée en température très rapide jusqu'à la température souhaitée pour éviter toute transformation microstructurale du matériau au cours du chauffage.

Ainsi, on cherche à pouvoir effectuer une montée en température de l'ordre de plusieurs centaines de °C/s jusqu'à une température maximale pouvant être supérieure ou égale à 1600°C sous un champ magnétique de 16 T.

Cependant, les éléments chauffants des dispositifs connus présentent une inertie thermique qui ne permet pas une montée en température aussi rapide, les meilleurs résultats obtenus à ce jour étant de l'ordre de quelques dizaines de °C/s.

En outre, l'espace disponible dans le champ magnétique intense est très restreint, le trou de champ de l'aimant supraconducteur étant de l'ordre de 32 mm à température ambiante.

Il est donc nécessaire de concevoir un dispositif de chauffage très compact, adapté pour s'insérer dans cet environnement.

Une autre contrainte à prendre en compte dans la conception d'un dispositif de chauffage est que l'on doit pouvoir équiper l'objet traité d'équipements de mesure (capteurs, sondes, etc.) afin de la caractériser.

Il est donc nécessaire de prévoir un volume suffisant autour de l'objet pour pouvoir disposer ces équipements.

Le but de l'invention est donc de surmonter tous ces obstacles et de procurer un dispositif de chauffage d'un objet dans un champ magnétique intense qui autorise des montées très rapides en température (jusqu'à plusieurs centaines de °C/s) et qui soit suffisamment compact pour s'insérer dans le dispositif de génération du champ magnétique intense.

Ce dispositif doit en outre être plus robuste que les dispositifs de chauffage existants et permettre de minimiser les interactions avec le champ magnétique.

## BREVE DESCRIPTION DE L'INVENTION

Conformément à l'invention, il est proposé un dispositif de chauffage d'un objet comprenant un matériau magnétique sous un champ magnétique intense, comprenant :

- une source lumineuse,
- une fibre optique pour transporter la lumière émise par ladite source lumineuse et émettre un faisceau lumineux en direction de l'objet à chauffer,
- un système optique convergent dont l'axe optique est aligné sur l'axe du faisceau lumineux,
- un diaphragme placé au point de focalisation du système optique,
- un réflecteur dont la paroi intérieure est définie par la révolution d'une demi-parabole autour d'un axe perpendiculaire à l'axe optique de la parabole et passant par le foyer de ladite parabole, l'axe optique dudit réflecteur étant confondu avec l'axe optique du système optique et le foyer optique dudit réflecteur étant confondu avec le point de focalisation dudit système optique,
- un support pour l'objet à chauffer, placé à l'intérieur du réflecteur,

ledit dispositif étant en outre adapté pour générer un champ magnétique intense autour de l'objet à chauffer.
Par « champ magnétique intense », on entend dans le présent texte tout champ magnétique d'intensité supérieure ou égale à 1 Tesla.
En un point donné de l'environnement de l'objet à chauffer, ledit champ magnétique peut être constant dans le temps ou variable.
Par ailleurs, ledit champ magnétique peut être constant en tout point de l'environnement de l'objet à chauffer, ou bien différent selon l'endroit considéré, par exemple distribué selon un gradient.
Ledit objet à chauffer est constitué au moins en partie d'un matériau magnétique.
Cet objet peut être par exemple une pièce manufacturée qui doit être traitée thermiquement, notamment si le procédé est mis en oeuvre dans un cadre industriel.
Ledit objet peut également être un échantillon de forme normalisée, par exemple lorsque le procédé est mis en oeuvre dans un cadre de recherche, pour étudier les effets du traitement thermique sous champ magnétique intense sur la structure du matériau.
Grâce à la conception judicieuse de ce dispositif optique, et notamment la forme particulière de la paroi intérieure du réflecteur, on obtient un dispositif de chauffage permettant de chauffer l'objet avec une vitesse de montée en température pouvant atteindre plusieurs centaines de °C/s tout en étant particulièrement compact et par conséquent compatible avec le volume disponible dans le trou de champ d'un aimant supraconducteur.
Selon des caractéristiques avantageuses dudit dispositif, prises isolément ou en combinaison :

- la source lumineuse est une diode laser ou un laser ;
- la longueur d'onde du faisceau lumineux émis par ladite source est supérieure ou égale à 800 nm ;
- le diaphragme et le réflecteur sont en cuivre ;
- la surface du diaphragme et du réflecteur du côté de l'objet à chauffer est revêtue d'une couche d'or.

Selon un premier mode de réalisation de l'invention, le système optique est constitué d'une lentille convergente.
Selon une deuxième forme d'exécution de l'invention, le système optique comprend successivement sur le trajet du faisceau lumineux une lentille convexe et une lentille asphérique dont les axes optiques sont confondus, le foyer du réflecteur étant alors confondu avec le foyer de ladite lentille asphérique.
Un autre aspect de l'invention concerne un procédé de chauffage d'un objet comprenant un matériau magnétique sous un champ magnétique intense, caractérisé en ce qu'il comprend :

- l'émission, en direction dudit objet à chauffer, d'un faisceau lumineux,
- la réfraction dudit faisceau à travers un système optique convergent dont l'axe optique est aligné sur l'axe du faisceau lumineux,
- le passage dudit faisceau réfracté à travers un diaphragme placé au point de focalisation dudit système optique,
- la réflexion dudit faisceau sur la paroi interne d'un réflecteur, ladite paroi intérieure étant définie par la révolution d'une demi-parabole autour d'un axe perpendiculaire à l'axe optique de la parabole et passant par le foyer de ladite parabole, l'axe optique dudit réflecteur étant confondu avec l'axe optique du système optique et le foyer dudit réflecteur étant confondu avec le point de focalisation dudit système optique,

- l'application d'un champ magnétique intense à l'objet à chauffer, ledit objet étant placé à l'intérieur du réflecteur.

Selon une première forme d'exécution du procédé de chauffage selon l'invention, le système optique est constitué d'une lentille convergente.

Selon un deuxième mode de réalisation du procédé de chauffage selon l'invention, ledit système optique comprend successivement, sur le trajet du faisceau lumineux, une lentille convexe et une lentille asphérique dont les axes optiques sont confondus, le foyer du réflecteur étant confondu avec le foyer de ladite lentille asphérique.

## BREVE DESCRIPTION DES DESSINS

D'autres caractéristiques et avantages de l'invention ressortiront de la description détaillée qui va suivre, en référence aux dessins annexés sur lesquels :

- la figure 1 est un schéma optique d'un premier mode de réalisation du dispositif de chauffage selon l'invention,
- la figure 2 est un schéma illustrant la réflexion des rayons lumineux dans le réflecteur en forme de demi-parabole,
- la figure 3 est une vue en coupe du réflecteur selon l'invention,
- la figure 4 présente les courbes de la réflectivité de différents matériaux en fonction de la longueur d'onde,
- la figure 5 présente les courbes de réflectivité en incidence normale du cuivre en fonction de la longueur d'onde (a) et de la puissance monochromatique directionnelle émise par un objet qui, dans ce cas, était cylindrique, assimilé à un corps noir de diamètre 4 mm et de hauteur 7 mm chauffé à 1500 K (b),
- la figure 6 est un schéma optique d'un deuxième mode de réalisation du dispositif de chauffage selon l'invention,
- la figure 7 est une vue en coupe à 120° du dispositif selon le premier mode de réalisation de l'invention,
- la figure 8 est une vue en perspective d'une partie du dispositif de la figure 7,
- la figure 9 est une vue en coupe à 120° du dispositif selon le deuxième mode de réalisation de l'invention,
- la figure 10 est une vue en perspective d'une partie du dispositif de la figure 9,
- la figure 11 présente la mesure de la température d'un objet de 1 cm$^3$ en fer/nickel en fonction du temps lors d'un essai du dispositif conforme à l'invention lors de cycles de chauffage-refroidissement réalisés sous vide pour différentes puissances de la source lumineuse,
- la figure 12 présente les mesures de températures d'un objet de 1 cm$^3$ en fer/nickel chauffé par le dispositif selon l'invention à pleine puissance.

## DESCRIPTION DETAILLEE DE L'INVENTION

Le champ magnétique est généré par tout dispositif permettant d'obtenir l'intensité souhaitée, qui est typiquement supérieure à 1 Tesla.

Le dispositif d'application du champ magnétique est connu en lui-même. Il peut être un système d'aimants permanents, un électro-aimant, une bobine supraconductrice, un aimant résistif ou un aimant hybride (combinaison d'un aimant résistif et d'une bobine supraconductrice).

De préférence, il est muni d'une chemise d'eau, qui protège l'aimant des radiations thermiques émanant du dispositif.

De manière particulièrement avantageuse, on emploie une bobine supraconductrice refroidie de type Cryogen free superconducting magnet, commercialisée par la société Cryogenic Limited, qui est facile d'utilisation, peu onéreuse et donc industriellement rentable.

Contrairement aux dispositifs connus qui sont basés sur des éléments chauffants résistifs ou inductifs, le dispositif de l'invention est un dispositif optique adapté pour chauffer uniformément l'objet grâce l'énergie apportée par une source lumineuse.

Un tel dispositif de chauffage optique présente l'avantage de ne pas engendrer de couplage électromagnétique avec le dispositif de génération du champ magnétique intense.

Par conséquent, il n'y a pas de risque de détérioration du dispositif de chauffage due à des interactions avec le champ magnétique intense.

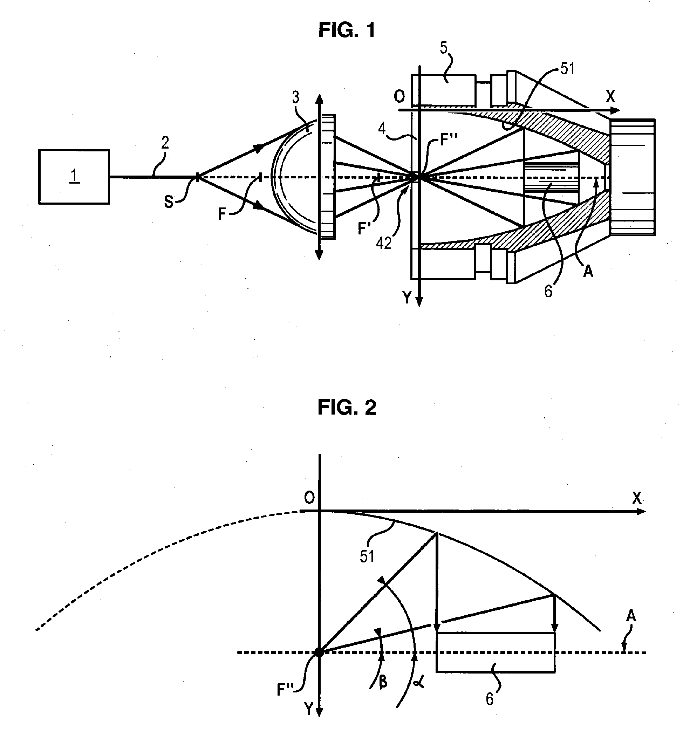

Selon un premier mode de réalisation schématisé à la figure 1, le dispositif de chauffage comprend une source lumineuse 1 connectée à une fibre optique 2 qui transporte la lumière émise par la source lumineuse et génère un faisceau lumineux.

Le point de sortie du faisceau de la fibre optique 2 est représenté par le repère S.

Un système optique 3, de foyers F (foyer objet) et F' (foyer image), est placé sur le trajet du faisceau lumineux, de telle sorte que son axe optique A soit confondu avec l'axe de la fibre optique au point S.

Le dispositif de chauffage comprend en outre un réflecteur 5 entourant l'objet 6 à chauffer.

Ledit réflecteur 5 est un volume creux dont la paroi intérieure 51 présente un profil de demi-parabole dont l'axe de révolution est confondu avec l'axe optique A du système optique 3.

Il est placé sur le chemin optique de telle sorte que le foyer F" du réflecteur soit placé au point de focalisation du système optique 3.

Par ailleurs, un diaphragme 4 est placé au foyer F" du réflecteur qui, comme indiqué plus haut, coïncide avec le point de focalisation du système optique 3.

Vis-à-vis des rayons lumineux, le réflecteur 5 est donc un volume fermé dont l'unique ouverture est l'orifice 42 du diaphragme 4.

Le réflecteur 5 et le diaphragme 4 sont en des matériaux présentant des états de surface adaptés pour réfléchir la lumière de la source lumineuse.

L'objet 6 à chauffer est un objet comprenant un matériau magnétique (de sorte à ce que ses propriétés soient influencées par le champ magnétique intense lors de son chauffage).

Dans les exemples décrits ci-dessous, l'objet 6 est un cylindre d'un alliage fer-nickel, mais il va de soi que l'invention est applicable au chauffage de toute autre forme d'objet et de tout autre matériau magnétique.

Les dimensions de l'objet sont de l'ordre de 5 mm en largeur (perpendiculairement à l'axe optique A) et 10 mm en hauteur (selon l'axe optique A).

Si l'objet n'est pas de forme cylindrique (il peut en effet présenter une forme quelconque) il doit néanmoins être inclus dans un cylindre de 5 mm de diamètre et de 10 mm de haut et dont l'axe de révolution coïncide avec l'axe optique A du système optique.

## Source lumineuse

La source lumineuse est de préférence une diode laser de forte puissance.

L'avantage d'une telle source est qu'elle émet une forte densité de puissance, qui peut être transportée et orientée de manière directive par une fibre optique de très faible encombrement.

Par ailleurs, les diodes lasers présentent à l'heure actuelle le meilleur compromis en termes de puissance (pouvant atteindre 1 kW), de poids et d'encombrement.

Cependant, d'autres sources lumineuses adéquates pourront être employées sans pour autant sortir du cadre de la présente invention.

Par exemple, un laser YAG, qui est largement employé dans le domaine industriel, convient à la mise en oeuvre de l'invention.

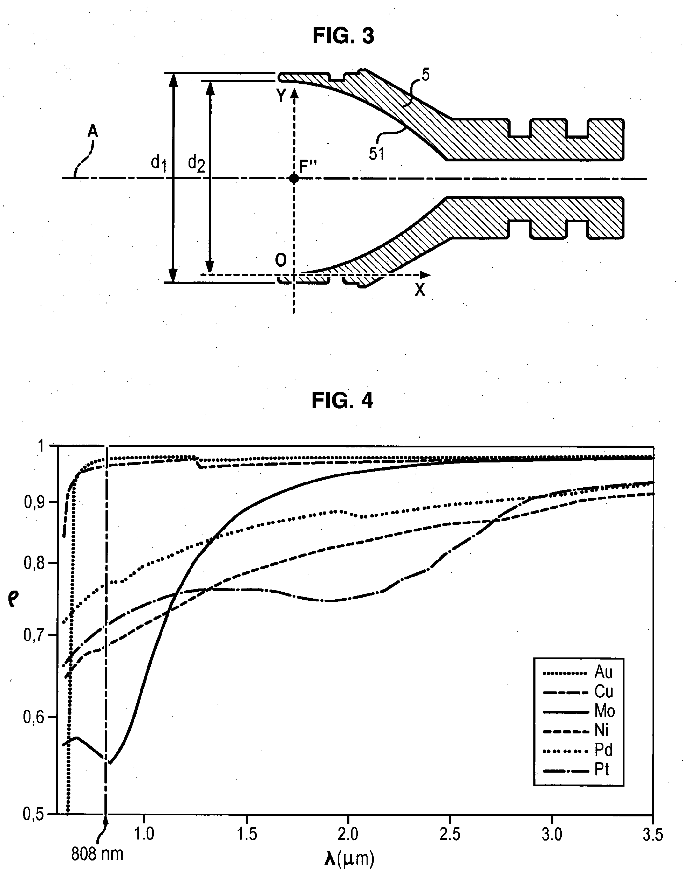

En effet, pour la longueur d'onde (1,06 $\mu$m) du laser YAG, le système optique présente une réflectivité supérieure à 0,98 pour le cuivre et l'or (cf. figure 4 décrite plus bas).

Le dispositif optique décrit ci-dessous permet de convertir l'éclairement ponctuel procuré par la source lumineuse en un éclairement directionnel apte à éclairer l'objet à chauffer de manière sensiblement uniforme sur toute sa surface.

## Réflecteur

La figure 2 illustre la réflexion des rayons lumineux provenant du foyer F" du réflecteur sur la paroi 51 du réflecteur 5.

La paroi interne 51 du réflecteur 5 est définie par la révolution d'une demi-parabole autour d'un axe parallèle à l'axe OX et passant par le foyer F" du réflecteur, qui est aussi le foyer optique de la parabole.

Sur la figure 2, on a représenté l'autre moitié de la parabole (c'est-à-dire son symétrique par rapport à l'axe optique OY de la parabole) en pointillés.

L'axe de révolution de la demi-parabole, qui constitue également l'axe optique du réflecteur 5, est perpendiculaire à l'axe optique OY de ladite parabole.

Ledit axe de révolution est en outre confondu avec l'axe optique A du système optique.

Comme on peut le voir à la figure 2, les rayons émis par une source lumineuse ponctuelle située au foyer F" se réfléchissent sur la demi-parabole et procurent des rayons parallèles à l'axe OY.

Ces rayons permettent d'éclairer l'objet 6 à chauffer, qui est ici représenté sous la forme d'un cylindre, de manière sensiblement uniforme sur toute sa hauteur.

Par ailleurs, l'éclairement de l'objet 6 se fait perpendiculairement à sa hauteur, ce qui représente l'incidence optimale pour un chauffage par rayonnement.

Les angles $\alpha$ et $\beta$ représentent la divergence de la source ponctuelle.

On voit donc que plus la divergence $\alpha$, $\beta$ est grande, plus l'objet à chauffer peut être éloigné du foyer F" de manière à favoriser l'uniformité de son éclairement.

Pour chauffer un objet cylindrique de 1 cm de hauteur environ, on cherche donc une source ponctuelle la plus divergente possible.

Cependant, la fibre optique ne procure pas de divergence (également appelée ouverture numérique) suffisante pour répondre à cet objectif.

Par ailleurs, une proximité trop grande de l'objet à chauffer risquerait de l'endommager en l'exposant à des températures très élevées.

Le système optique 3 décrit en détail plus bas permet de focaliser le faisceau laser en totalité sur le foyer F" du réflecteur 5.

La figure 3 est une vue en coupe du réflecteur 5 permettant de décrire son dimensionnement.

Le diamètre $d_1$ correspond à l'encombrement extérieur maximum du réflecteur 5.

Comme expliqué plus haut, le dispositif de chauffage doit en effet être le plus compact possible pour être compatible avec le dispositif de génération du champ magnétique intense.

Par exemple, le diamètre $d_1$ vaut 28 mm.

Le diamètre $d_2$ est le diamètre intérieur le plus large du réflecteur 5. Il est mesuré le long de l'axe OY et correspond à la différence entre le diamètre extérieur $d_1$ et l'épaisseur du réflecteur, qui est dans cette zone la plus faible possible pour ménager un volume intérieur le plus important possible.

Par exemple, $d_1$ vaut 26 mm. Cette valeur correspond au double de la distance OF", qui vaut donc dans cet exemple 13 mm.

L'équation de la demi-parabole peut se déduire de la position du foyer F" :

$$Y = X^2 / (4 * OF")$$

Dans l'exemple donné ci-dessus, l'équation de la demi-parabole est donc $Y = X^2 / 52$.

Diaphragme

Le diaphragme 4 comprend une plaque plane percée d'un orifice 42 situé au point de focalisation du système optique 3, de telle sorte que les rayons diffractés par le système optique 3 soient focalisés au niveau dudit orifice 42 et pénètrent tous dans le réflecteur 5 ; la plaque plane est quant à elle réfléchissante de sorte à réfléchir les rayons qui la frappent vers l'objet 6 à chauffer.

Les matériaux du réflecteur 5 et du diaphragme 4 sont choisis pour présenter, à la longueur d'onde de la source lumineuse 1, une réflectivité maximale, c'est-à-dire la plus proche de 1.

La figure 4 présente les courbes de la réflectivité $\rho$ (selon une échelle logarithmique) en fonction de la longueur d'onde $\lambda$ (en $\mu$m) pour différents matériaux: l'or, le cuivre, le molybdène, le nickel, le palladium et le platine.

Ainsi, pour une source lumineuse 1 constituée d'un laser émettant à une longueur d'onde de 808 nm, le cuivre et l'or constituent des matériaux optimaux pour le réflecteur 5 et le diaphragme 4, puisque leur réflectivité est proche de 0,96.

Le cuivre présente en outre l'avantage d'être facile à usiner, peu onéreux et présente une bonne conductivité thermique.

Selon un mode préféré de réalisation de l'invention, le réflecteur 5 et le diaphragme 4 sont donc réalisés en cuivre.

Eventuellement, une couche d'or, dont l'épaisseur est par exemple de 0,5 $\mu$m, peut être déposée sur le cuivre pour le protéger de l'oxydation, ce qui permet d'optimiser les propriétés optiques de réflexion du réflecteur et du diaphragme.

Par ailleurs, pour que le réflecteur 5 et le diaphragme 4 présentent une réflectivité optimale, leur surface (ou, le cas échéant, celle de la couche d'or qui les recouvre) doit présenter une rugosité optique minimale.

D'après l'ouvrage de M. Modest, Radiate Heat Transfer, 2nd Edition, Academic Press (2003), pp 90-93, l'effet de la rugosité optique $\sigma$ d'une surface sur sa réflectivité est liée au rapport entre la hauteur moyenne Ra des aspérités et la longueur d'onde des rayons réfléchis, selon la formule : $\sigma = Ra / \lambda$.

Ainsi, pour l'application visée dans l'invention, la rugosité optique doit être inférieure à 0,1, ce qui, pour une longueur d'onde de 0,806 $\mu$m, conduit à tolérer une rugosité maximale de 80 nm.

Pour obtenir un tel état de surface, on procède à un polissage très fin de la paroi intérieure 51 du réflecteur et de la surface du diaphragme faisant face à l'objet à chauffer.

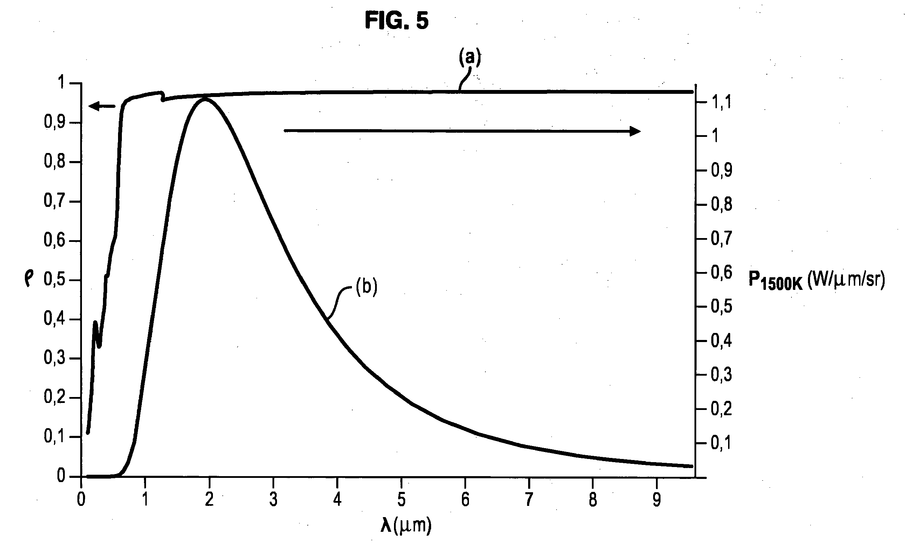

La figure 5 présente la réflectivité $\rho$ en incidence normale du cuivre en fonction de la longueur d'onde $\lambda$ (courbe (a)) ainsi que la puissance monochromatique directionnelle $P_{1500K}$ (en W/$\mu$m/sr) émise par l'objet 6 à chauffer, en assimilant ledit objet à un corps noir cylindrique de 7 mm de hauteur et 4 mm de diamètre, à une température de 1500 K (courbe (b)).

Ce graphique permet de vérifier que le cuivre a une réflectivité comprise entre 0,96 et 0,98 sur la plage de longueur d'onde d'émission de l'objet chauffé à 1500 K.

Les surfaces de la paroi 51 du réflecteur 5 et du diaphragme 4 peuvent donc être considérées comme quasiment adiabatiques vis-à-vis du rayonnement émis par l'objet 6 chauffé à 1500 K.

Les parois du réflecteur 5 et du diaphragme 4 étant réalisés en cuivre, qui est un très bon conducteur thermique et dont les pertes par absorption (qu'elles soient dues à l'absorption du rayonnement émis par la source lumineuse 1 ou à l'absorption du rayonnement émis par l'objet 6 chauffé à 1500 K) sont négligeables, sont donc isothermes. Ainsi, bien que le coefficient de réflexion du cuivre varie avec la température, il reste, dans cette situation, constant et à son maximum au cours du chauffage de l'objet, ce qui confirme l'intérêt de ce matériau.

Par ailleurs, comme mentionné plus haut, une couche d'or peut être déposée sur le cuivre sans modifier sa rugosité optique et le protéger de l'oxydation tout en préservant ses propriétés de réflexion.

Système optique

Selon un premier mode de réalisation, illustré à la figure 1, le système optique 3 est constitué d'une unique lentille convergente de foyers F et F'.

Le faisceau lumineux à la sortie S de la fibre optique étant divergent, le point de focalisation, à l'emplacement duquel sont positionnés l'orifice 42 du diaphragme 4 et le foyer F" du réflecteur 5, est distinct du foyer F' de la lentille convergente.

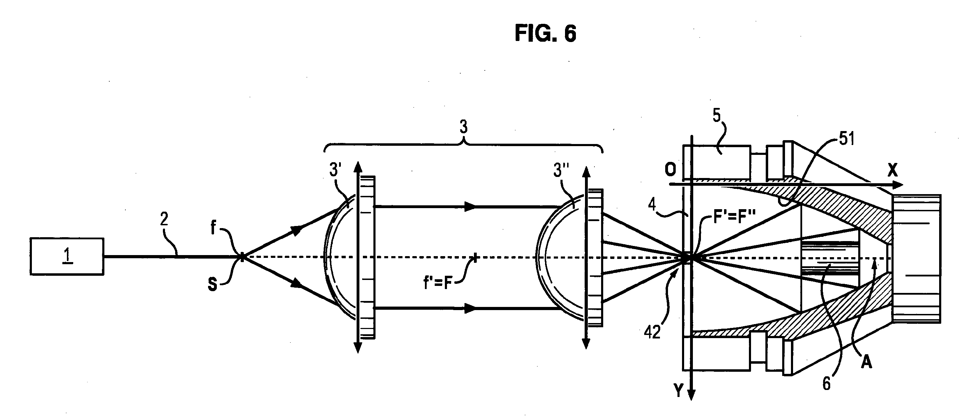

Selon un deuxième mode de réalisation, illustré à la figure 6, le système optique 3 est constitué de deux lentilles convergentes, la première étant une lentille convexe 3' de foyers f, f et la seconde une lentille asphérique 3" de foyers F, F', les axes optiques de ces deux lentilles étant confondus.

La lentille convexe 3' est située en amont de la lentille asphérique 3" sur le trajet des rayons lumineux.

La sortie S de la fibre optique 2 est située au foyer f de la lentille convexe 3'.

Par conséquent, le faisceau diffracté par la lentille convexe 3' est parallèle.

Par ailleurs, le foyer objet F de la lentille asphérique 3" est situé au foyer image f' de la lentille convexe.

Ainsi, la lentille asphérique 3" focalise le faisceau parallèle sur son foyer F' qui est confondu avec le foyer F" de la demi-parabole du réflecteur et l'orifice 42 du diaphragme 4.

Ce système présente deux avantages : le premier est d'être plus facile à régler que celui du premier mode de réalisation, les distances focales des lentilles étant connues de manière précise ; le second est qu'il permet d'obtenir la divergence maximale du faisceau lumineux en sortie du foyer F' du système optique 3 qui est alors confondu avec F".

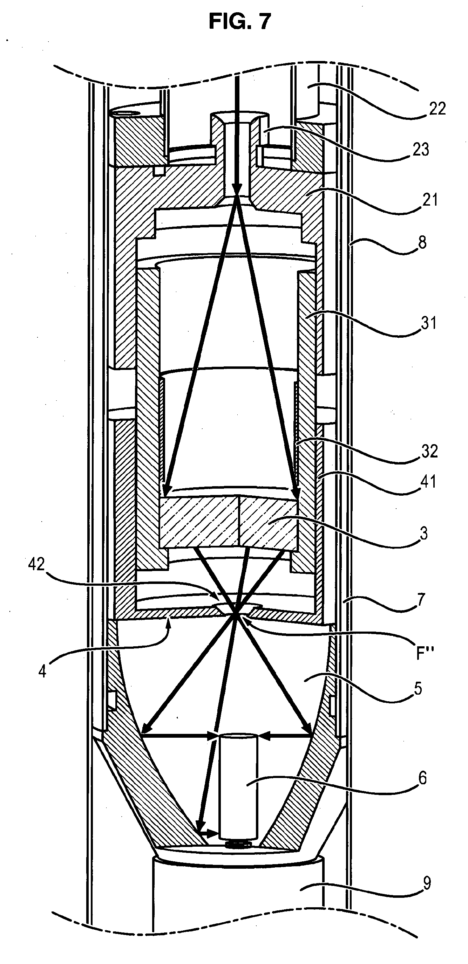

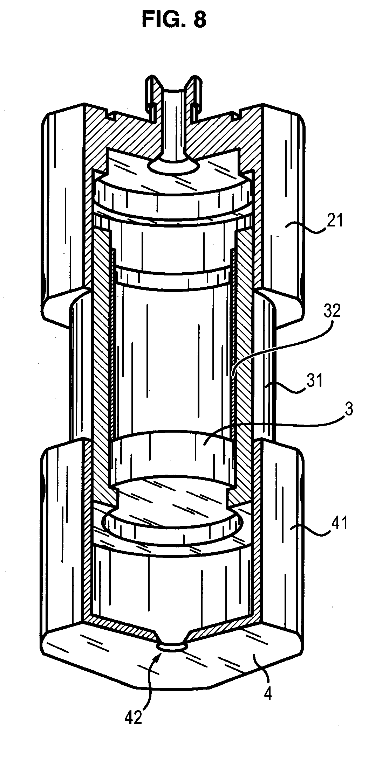

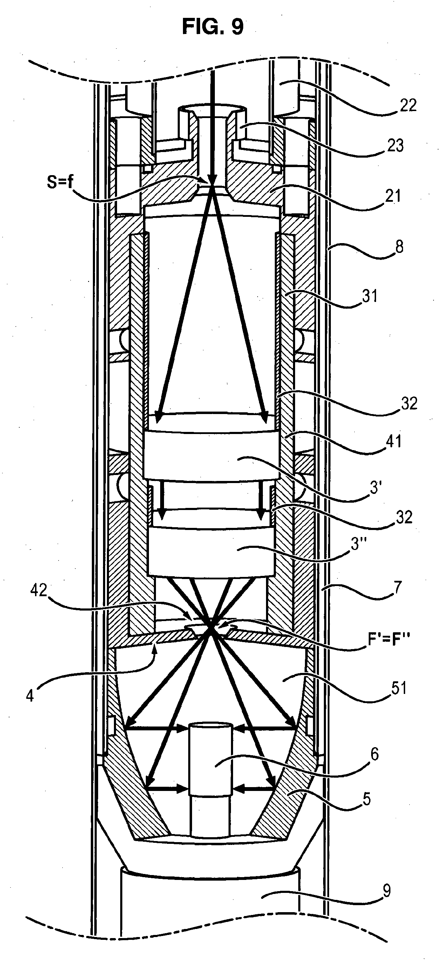

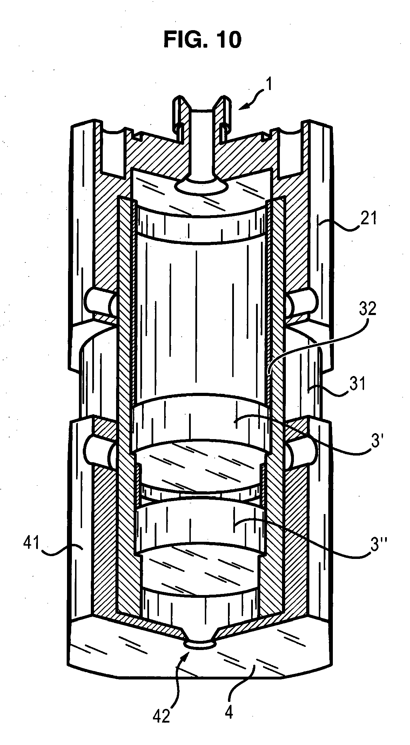

En ce qui concerne la conception mécanique du dispositif de chauffage, on peut se référer aux figures 7 et 8 pour le premier mode de réalisation du système optique et aux figures 9 et 10 pour le deuxième mode de réalisation du système optique.

La figure 7 présente une vue en coupe du dispositif conforme au premier mode de réalisation de l'invention.

La fibre optique (non représentée) est confinée dans un tube 22, par exemple en inox. La fibre optique est connectée à l'entrée 23 d'un élément de connexion 21.

La lentille convergente 3 est supportée par un tube 31, qui est par exemple en inox. Elle est bloquée à l'intérieur de ce tube 31 par un élément de blocage 32.

L'élément de connexion 21 de la fibre optique est agencé en coulissement sur le tube 31 pour permettre le réglage de la distance entre la sortie de la fibre optique et la lentille 3.

De l'autre côté de la lentille 3, le diaphragme 4 est agencé en coulissement (par l'intermédiaire d'une paroi 41) sur le tube 31 support de la lentille 3, ce qui permet de régler la distance entre le diaphragme et la lentille.

Le dispositif est entouré d'une chemise d'eau dont la fonction est d'isoler thermiquement le dispositif de génération du champ magnétique intense (non illustré) vis-à-vis de la chaleur générée lors du chauffage de l'objet 6.

A cet effet, la chemise d'eau est typiquement formée d'un assemblage de tubes 7, 8, 9 délimitant un volume d'eau en circulation.

Un tube extérieur 8 définit l'enveloppe externe de la chemise d'eau.

L'encombrement disponible étant très limité, ce tube extérieur 8 entoure le système optique 3, le diaphragme 4 et le réflecteur 5 avec une assez faible distance.

Par exemple, le diamètre extérieur du tube 8 est de 32 mm tandis que son diamètre intérieur est d'environ 31 mm.

Un premier tube intérieur 7 est agencé dans le tube extérieur 8 en entourant le système optique 3 et le réflecteur 5.

Par exemple, le diamètre extérieur du tube 7 est de 29 mm et son diamètre intérieur est de 28 mm.

Une mince lame d'eau peut donc circuler entre les tubes 7 et 8.

Un deuxième tube intérieur 9 est agencé contre le réflecteur 5, dans le prolongement de l'axe optique A du système optique.

Ledit tube 9 présente par exemple un diamètre extérieur de 18 mm et un diamètre intérieur de 17 mm.

En raison de la forme extérieure évasée du réflecteur 5, il existe, notamment autour de l'objet à chauffer 6, un volume plus important d'eau.

La figure 8 est une vue en perspective des pièces 3, 31, 32 et 4.

La figure 9 présente une vue en coupe du dispositif conforme au deuxième mode de réalisation de l'invention.

Les éléments portant les mêmes signes de référence que sur la figure 7 remplissent la même fonction.

Ce dispositif diffère essentiellement du précédent en ce qu'il comprend une lentille convexe 3' et une lentille asphérique 3" supportées par un tube de support 31.

Deux éléments de blocage 32 permettent de maintenir lesdites lentilles dans le tube 31.

Dans ce dispositif, la chemise d'eau 7, 8, 9 est similaire à celle décrite en référence à la figure 7.

La figure 10 est une vue en perspective des pièces 3', 3", 31, 32 et 4.

Résultats expérimentaux

L'obtention, grâce au dispositif décrit ci-dessus, de la vitesse de montée en température attendue a été démontrée par des essais réalisés sur un objet en un alliage fer-nickel de forme cylindrique de 1 cm$^3$, présentant un diamètre de 4 mm et une hauteur de 7 mm de haut, équipé d'un thermocouple.

Ledit objet était placé dans le réflecteur de sorte à ce que son axe de révolution coïncide avec l'axe optique du système optique.

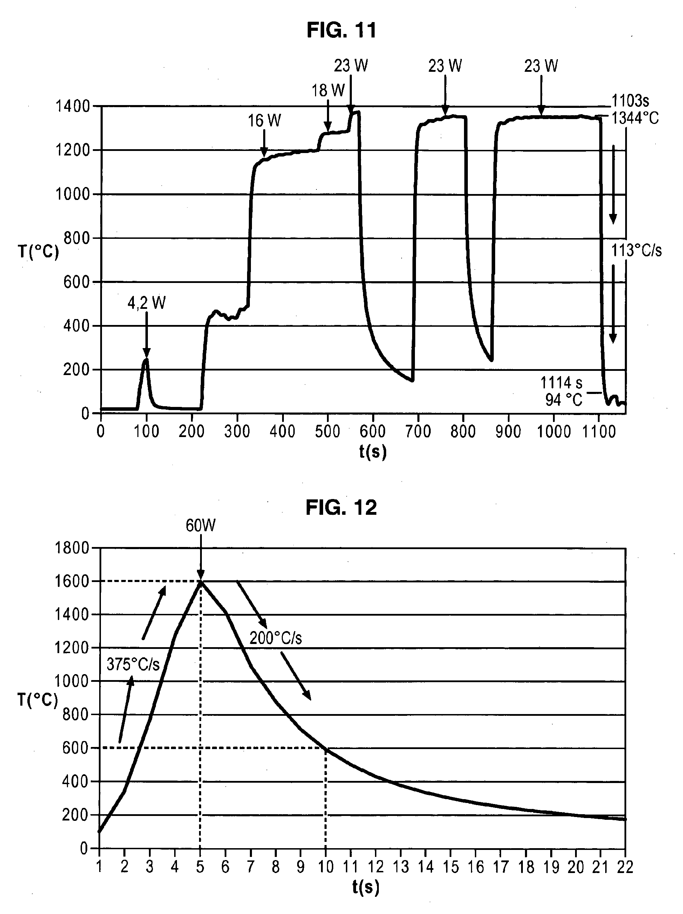

La figure 11 illustre un premier essai consistant à appliquer progressivement une puissance de plus en plus importante avec la diode laser de 806 nm de longueur d'onde constituant la source lumineuse, le dispositif étant sous vide.

Le diagramme de la figure 11 présente la température mesurée par le thermocouple en fonction du temps.

Au-dessus de chaque portion de courbe est indiquée la puissance délivrée par la diode laser.

Comme on peut le voir sur cette figure, le seuil d'amorçage du chauffage de l'objet par la diode laser est d'environ 4 W sous vide et permet d'obtenir une température d'environ 250°C.

On vérifie ensuite, avec des cycles de chauffage-refroidissement, qu'à une puissance de donnée correspond une même température, ce qui montre que le dispositif procure un chauffage répétable.

Par ailleurs, on constate que les pentes de chauffage et de refroidissement sont très raides (de l'ordre de 100 °C/s au moins), ce qui met en évidence la faible inertie thermique du dispositif.

A la fin des cycles de chauffage-refroidissement une trempe est réalisée par injection d'argon dans l'enceinte ; la vitesse de trempe mesurée est de 113°C/s.

On notera de plus que, pour une température moins élevée de l'ordre de 1200°C, les dispositifs de chauffage classiques doivent fournir à l'objet une puissance de plus de 300 W, soit 20 fois plus que le chauffage laser qui, à 1200°C, ne fournit que 18 W.

La figure 12 illustre un deuxième type d'essai réalisé avec le même dispositif et le même type d'objet que précédemment, cette fois à pleine puissance (60 W) de la diode laser, sous vide.

On atteint une température de 1600°C en 5 secondes, c'est-à-dire une vitesse de chauffage comprise entre 266 et 375°C, qui correspond à l'objectif recherché d'obtenir des montées en température plus rapides que les chauffages classiques de manière à permettre des recuits « flash » sous champ magnétique intense.

Cette température étant proche de la température de fusion de l'objet et de dégradation des thermocouples, l'émission du laser a ensuite été stoppée brutalement.

La vitesse de refroidissement est de l'ordre de 200°C/s.

Par ailleurs, la gamme de températures atteintes - entre 250 et au moins 1600°C - est parfaitement adaptée aux différents traitements métallurgiques pratiqués dans le domaine de la recherche et dans l'industrie.

Enfin, le chauffage étant réalisé uniquement de manière optique, il ne se produit aucune interaction avec le champ magnétique, ce qui résulte en un dispositif beaucoup plus robuste que les dispositifs de chauffage conventionnels.

Il va de soi que les exemples que l'on vient de donner ne sont que des illustrations particulières en aucun cas limitatives quant aux domaines d'application de l'invention.

**Revendications**

1. Dispositif de chauffage d'un objet (6) comprenant un matériau magnétique sous un champ magnétique intense, **caractérisé en ce qu'**il comprend :

   - une source lumineuse (1),
   - une fibre optique (2) pour transporter la lumière émise par ladite source lumineuse (1) et émettre un faisceau lumineux en direction de l'objet (6) à chauffer,
   - un système optique (3) convergent dont l'axe optique (A) est aligné sur l'axe du faisceau lumineux,
   - un diaphragme (4) placé au point de focalisation du système optique (3),
   - un réflecteur (5), dont la paroi intérieure est définie par la révolution d'une demi-parabole autour d'un axe perpendiculaire à l'axe optique de la parabole et passant par le foyer de ladite parabole, l'axe optique dudit réflecteur (5) étant confondu avec l'axe optique (A) du système optique (3) et le foyer (F") dudit réflecteur étant confondu avec le point de focalisation dudit système optique (3),

- un support pour l'objet (6) à chauffer, placé à l'intérieur du réflecteur (5),

ledit dispositif étant en outre adapté pour générer un champ magnétique intense autour de l'objet (6) à chauffer.

2. Dispositif selon la revendication 1, **caractérisé en ce que** la source lumineuse (1) est une diode laser ou un laser.

3. Dispositif selon l'une des revendications 1 ou 2, **caractérisé en ce que** la longueur d'onde du faisceau lumineux émis par ladite source (1) est supérieure ou égale à 800 nm.

4. Dispositif selon l'une des revendications 1 à 3, **caractérisé en ce que** le diaphragme (4) et le réflecteur (5) sont en cuivre.

5. Dispositif selon la revendication 4, **caractérisé en ce que** la surface du diaphragme et du réflecteur du côté de l'objet (6) à chauffer est revêtue d'une couche d'or.

6. Dispositif selon l'une des revendications 1 à 5, **caractérisé en ce que** ledit système optique (3) est constitué d'une lentille convergente.

7. Dispositif selon l'une des revendications 1 à 5, **caractérisé en ce que** ledit système optique (3) comprend une lentille convexe (3') et une lentille asphérique (3") dont les axes optiques sont confondus, le foyer (F") du réflecteur (5) étant confondu avec le foyer (F') de ladite lentille asphérique (3").

8. Procédé de chauffage d'un objet (6) comprenant un matériau magnétique sous un champ magnétique intense, **caractérisé en ce qu'**il comprend :

- l'émission, en direction dudit objet (6) à chauffer, d'un faisceau lumineux,
- la réfraction dudit faisceau à travers un système optique (3) convergent dont l'axe optique (A) est aligné sur l'axe du faisceau lumineux,
- le passage dudit faisceau réfracté à travers un diaphragme (4) placé au point de focalisation dudit système optique (3),
- la réflexion dudit faisceau sur la paroi interne (51) d'un réflecteur (5), ladite paroi intérieure étant définie par la révolution d'une demi-parabole autour d'un axe perpendiculaire à l'axe optique de la parabole et passant par le foyer de ladite parabole, l'axe optique dudit réflecteur (5) étant confondu avec l'axe optique (A) du système optique (3) et le foyer (F") dudit réflecteur étant confondu avec le point de focalisation dudit système optique (3),
- l'application d'un champ magnétique intense à l'objet (6) à chauffer, ledit objet (6) étant placé à l'intérieur du réflecteur (5).

9. Procédé selon la revendication 8, **caractérisé en ce que** ledit système optique (3) est constitué d'une lentille convergente.

10. Procédé selon la revendication 8, **caractérisé en ce que** ledit système optique (3) comprend une lentille convexe (3') et une lentille asphérique (3") dont les axes optiques sont confondus, le foyer (F") du réflecteur (5) étant confondu avec le foyer (F') de ladite lentille asphérique (3").

**Patentansprüche**

1. Vorrichtung zum Erhitzen eines Objekts (6), umfassend ein magnetisches Material in einem starken magnetischen Feld, **dadurch gekennzeichnet, dass** sie umfasst:

- eine Lichtquelle (1),
- eine optische Faser (2), um das von der Lichtquelle (1) gesendete Licht zu transportieren und einen Lichtstrahl in Richtung des zu erhitzenden Objekt (6) zu senden,
- ein konvergierendes optisches System (3), dessen optische Achse (A) auf der Achse des Lichtstrahls fluchtet,
- eine Blende (4), die im Fokalpunkt des optischen Systems (3) platziert ist,
- einen Reflektor (5), dessen Innenwand von der Umdrehung einer Halbparabel um eine zur optischen Achse der Parabel senkrechte Achse definiert ist, die durch den Mittelpunkt der Parabel verläuft, wobei die optische Achse des Reflektors (5) mit der optischen Achse (A) des optischen Systems (3) zusammenfällt und der Mittelpunkt (F") des Reflektors mit dem Fokalpunkt des optischen Systems (3) zusammenfällt,
- einen Halter für das zu erhitzende Objekt (6), das im Innern des Reflektors (5) platziert ist,

wobei die Vorrichtung ferner ausgebildet ist, um ein starkes magnetisches Feld um das zu erhitzende Objekt (6) zu erzeugen.

2. Vorrichtung nach Anspruch 1, **dadurch gekennzeichnet, dass** die Lichtquelle (1) eine Laserdiode oder ein Laser ist.

3. Vorrichtung nach einem der Ansprüche 1 oder 2, **dadurch gekennzeichnet, dass** die Wellenlänge des von der Quelle gesendeten Lichtstrahls (1) größer oder gleich 800 nm ist.

4. Vorrichtung nach einem der Ansprüche 1 bis 3, **dadurch gekennzeichnet, dass** die Blende (4) und der Reflektor (5) aus Kupfer sind.

5. Vorrichtung nach Anspruch 4, **dadurch gekennzeichnet, dass** die Oberfläche der Blende und des Reflektors auf der Seite des zu erhitzenden Objekts (6) mit einer Goldschicht beschichtet ist.

6. Vorrichtung nach einem der Ansprüche 1 bis 5, **dadurch gekennzeichnet, dass** das optische System (3) aus einer konvergierenden Linse gebildet ist.

7. Vorrichtung nach einem der Ansprüche 1 bis 5, **dadurch gekennzeichnet, dass** das optische System (3) eine konvexe Linse (3') und eine asphärische Linse (3") umfasst, deren optische Achsen zusammenfallen, wobei der Mittelpunkt (F") des Reflektors (5) mit dem Mittelpunkt (F') der asphärischen Linse (3") zusammenfällt.

8. Verfahren zum Erhitzen eines Objekts (6), umfassend ein magnetisches Material in einem starken magnetischen Feld, **dadurch gekennzeichnet, dass** es umfasst:

   - das Senden eines Lichtstrahls in Richtung des zu erhitzenden Objekts (6),
   - die Refraktion des Strahls durch ein konvergierendes optisches System (3), dessen optische Achse (A) auf der Achse des Lichtstrahls fluchtet,
   - das Hindurchgehen des refraktierten Strahls durch eine Blende (4), die im Fokalpunkt des optischen Systems (3) platziert ist,
   - die Reflexion des Strahls auf der Innenwand (51) eines Reflektors (5), wobei die Innenwand von der Umdrehung einer Halbparabel um eine zur optischen Achse der Parabel senkrechte Achse definiert ist, die durch den Mittelpunkt der Parabel verläuft, wobei die optische Achse des Reflektors (5) mit der optischen Achse (A) des optischen Systems (3) zusammenfällt und der Mittelpunkt (F") des Reflektors mit dem Fokalpunkt des optischen Systems (3) zusammenfällt,
   - die Anwendung eines starken magnetischen Felds auf das zu erhitzende Objekt (6), wobei das Objekt (6) im Innern des Reflektors (5) platziert ist.

9. Verfahren nach Anspruch 8, **dadurch gekennzeichnet, dass** das optische System (3) aus einer konvergierenden Linse gebildet ist.

10. Verfahren nach Anspruch 8, **dadurch gekennzeichnet, dass** das optische System (3) eine konvexe Linse (3') und eine asphärische Linse (3") umfasst, deren optische Achsen zusammenfallen, wobei der Mittelpunkt (F") des Reflektors (5) mit dem Mittelpunkt (F') der asphärischen Linse (3") zusammenfällt.

**Claims**

1. A device for heating an object (6) comprising a magnetic material under intense magnetic field, **characterised in that** it comprises:

   - a light source (1),
   - fibre optics (2) for transporting the light emitted by said light source (1) and emitting a light beam in the direction of the object (6) to be heated,

- a convergent optical system (3) whereof the optical axis (A) is aligned with the axis of the light beam,
- a diaphragm (4) placed at the focal point of the optical system (3),
- a reflector (5), whereof the inner wall is defined by the revolution of a semi-parabola about an axis perpendicular to the optical axis of the parabola and passing through the focal point of said parabola, the optical axis of said reflector (5) coinciding with the optical axis (A) of the optical system (3) and the focal point (F") of said reflector coinciding with the focal point of said optical system (3),
- a support for the object (6) to be heated, placed inside the reflector (5),

said device further being adapted to generate an intense magnetic field around the object (6) to be heated.

2. The device according to claim 1, **characterised in that** the light source (1) is a laser diode or a laser.

3. The device according to one of claims 1 or 2, **characterised in that** the wavelength of the light beam emitted by said source (1) is greater than or equal to 800 nm.

4. The device according to one of claims 1 to 3, **characterised in that** the diaphragm (4) and the reflector (5) are made of copper.

5. The device according to claim 4, **characterised in that** the surface of the diaphragm and of the reflector on the side of the object (6) to be heated is coated with a layer of gold.

6. The device according to one of claims 1 to 5, **characterised in that** said optical system (3) consists of a converging lens.

7. The device according to one of claims 1 to 5, **characterised in that** said optical system (3) comprises a convex lens (3') and an aspherical lens (3") whereof the optical axes coincide, the focal point (F") of the reflector (5) coinciding with the focal point (F') of said aspherical lens (3").

8. A method for heating an object (6) comprising magnetic material under intense magnetic field, **characterised in that** it comprises:

- emission, in the direction of said object (6) to be heated, of a light beam,
- refraction of said beam via a convergent optical system (3) whereof the optical axis (A) is aligned with the axis of the light beam,
- passage of said refracted beam via a diaphragm (4) placed at the focal point of said optical system (3),
- reflection of said beam on the inner wall (51) of a reflector (5), said inner wall being defined by the revolution of a semi-parabola about an axis perpendicular to the optical axis of the parabola and passing through the focal point of said parabola, the optical axis of said reflector (5) coinciding with the optical axis (A) of the optical system (3) and the focal point (F") of said reflector coinciding with the focal point of said optical system (3),
- application of an intense magnetic field to the object (6) to be heated, said object (6) being placed inside the reflector (5).

9. The method according to claim 8, **characterised in that** said optical system (3) consists of a converging lens.

10. The method according to claim 8, **characterised in that** said optical system (3) comprises a convex lens (3') and an aspherical lens (3") whereof the optical axes coincide, the focal point (F") of the reflector (5) coinciding with the focal point (F') of said aspherical lens (3").

## FIG. 1

## FIG. 2

# FIG. 3

# FIG. 4

**FIG. 5**

EP 2 758 553 B1

FIG. 6

EP 2 758 553 B1

## FIG. 7

**FIG. 8**

## FIG. 9

## FIG. 10

## FIG. 11

## FIG. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011012673 A

**Littérature non-brevet citée dans la description**

- **K. TAKAHASHI et al.** Magnetic orientation of paraffin in a magnetic levitation furnace. *Physica B,* 2004, vol. 346-347, 277-281

- **M. MODEST.** Radiate Heat Transfer. Academic Press, 2003, 90-93